(19) Europäisches Patentamt / European Patent Office / Office européen des brevets

(11) **EP 3 005 638 B1**

(12) **FASCICULE DE BREVET EUROPEEN**

(45) Date de publication et mention
de la délivrance du brevet:
**25.10.2017 Bulletin 2017/43**

(21) Numéro de dépôt: **14738541.3**

(22) Date de dépôt: **28.05.2014**

(51) Int Cl.:
***H04L 27/26*** *(2006.01)*

(86) Numéro de dépôt international:
**PCT/FR2014/051275**

(87) Numéro de publication internationale:
**WO 2014/191693 (04.12.2014 Gazette 2014/49)**

(54) **PROCEDE ET DISPOSITIF DE MODULATION DELIVRANT UN SIGNAL A PORTEUSES MULTIPLES A CADENCE SUPERIEURE A NYQUIST**

MODULATIONSVERFAHREN UND -VORRICHTUNG ZUR BEREITSTELLUNG EINES MEHRTRÄGERSIGNALS UND ZUGEHÖRIGES DEMODULATIONSVERFAHREN UND VORRICHTUNG UND COMPUTERPROGRAMM

MODULATION METHOD AND DEVICE DELIVERING A MULTICARRIER SIGNAL, AND CORRESPONDING DEMODULATION METHOD AND DEVICE AND COMPUTER PROGRAMME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2013 FR 1354842**

(43) Date de publication de la demande:
**13.04.2016 Bulletin 2016/15**

(73) Titulaire: **Orange**
**75015 Paris (FR)**

(72) Inventeurs:
• **LIN, Hao**
**35700 Rennes (FR)**
• **SIOHAN, Pierre**
**F-35200 Rennes (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
• **DEEPAK DASALUKUNTE ET AL: "Multicarrier Faster-Than-Nyquist Transceivers: Hardware Architecture and Performance Analysis", IEEE TRANSACTIONS ON CIRCUITS AND SYSTEMS I: REGULAR PAPERS, IEEE, US, vol. 58, no. 4, 1 avril 2011 (2011-04-01), pages 827-838, XP011352197, ISSN: 1549-8328, DOI: 10.1109/TCSI.2010.2089549**
• **PRENDERGAST R S ET AL: "Optimal Filter Bank Reconstruction of Periodically Undersampled Signals", 2005 IEEE INTERNATIONAL CONFERENCE ON ACOUSTICS, SPEECH, AND SIGNAL PROCESSING - 18-23 MARCH 2005 - PHILADELPHIA, PA, USA, IEEE, PISCATAWAY, NJ, vol. 4, 18 mars 2005 (2005-03-18), pages 201-204, XP010792517, DOI: 10.1109/ICASSP.2005.1415980 ISBN: 978-0-7803-8874-1**

EP 3 005 638 B1

**Description**

**1. Domaine de l'invention**

Le domaine de l'invention est celui des communications mettant en oeuvre une modulation multiporteuse.

Plus précisément, l'invention propose une technique de modulation permettant une transmission de données au-delà de la cadence de Nyquist (en anglais FTN pour « Faster Than Nyquist ») pour des systèmes multiporteuses.

L'invention trouve notamment des applications dans le domaine des communications sans fil (DAB, DVB-T, WLAN, optique non guidée, etc) ou filaires (xDSL, PLC, optique, etc). Par exemple, l'invention trouve des applications dans le domaine des communications cellulaires, sur voix montante ou descendante, des communications entre dispositifs (en anglais D2D pour « Device to Device »), des communications à partir d'un réseau de réacheminement (en anglais « backhauling »), etc.

**2. Art antérieur**

Le principe des transmissions au-delà de la cadence de Nyquist a été présenté en 1975 par E. Mazo, dans le document « Faster-than-Nyquist signaling » (Bell. Syst. Tech. Journal, 54 :1451-1462).

Selon ce document, la transmission à la cadence de Nyquist peut s'illustrer en considérant la transmission d'une suite d'informations binaires indépendantes $\{a_n\}$ telles que $a_n = \pm 1$ par une impulsion de Nyquist :

$$g(t) = \frac{\sin(\pi t/T)}{(\pi t/T)}$$

Cette transmission peut s'effectuer sans interférences, et donc sans erreur, dans un canal de transmission de largeur $W$, avec $T$ la durée d'un symbole telle que $T = 1/2W$. Dans le cas d'une transmission perturbée par un bruit additif, blanc et gaussien (en anglais AWGN pour « Additive White Gaussian Noise »), le détecteur optimal, qui va minimiser la probabilité d'erreur bit, est réalisé avec l'utilisation en réception d'un filtre adapté à l'impulsion de Nyquist, i.e. $g(-t)$.

Ce système de transmission est orthogonal, c'est-à-dire qu'il vérifie la condition :

$$\int g(t - nT)g(t - n'T)dt = \delta_{n,n'}$$

où $\delta$ désigne le symbole de Kronecker.

Pour aller au delà de la cadence de Nyquist (FTN), sans modifier la puissance de transmission, il est possible de rapprocher les impulsions en les transmettant espacées d'une durée $T' < T$, autrement dit en compressant d'un facteur $\rho$ tel que $T' = \rho T$ avec $0 < \rho < 1$. On vérifie alors qu'au lieu de $WT = 1/2$, on a $WT' < 1/2$.

Une telle transmission FTN permet donc de réduire le temps de transmission pour un volume d'information donné ou, en d'autres termes, d'augmenter le volume d'information pour un temps de transmission donné.

La transmission FTN génère toutefois de fortes interférences dont l'annulation implique des processus de traitement de signal spécifiques.

De plus, elle a principalement été développée pour des modulations monoporteuses.

D. Dasalukunte et al. ont proposé, dans le document « Multicarrier faster than Nyquist transceivers : Hardware architecture and performance analysis » (IEEE Transactions on Circuits and Systems I : Regular Papers, 58, 2011) une technique de transmission FTN adaptée à un système multiporteuse.

La technique décrite dans ce document concerne les modulations OFDM/OQAM, et propose d'introduire des facteurs de compression $T_\Delta$ et $F_\Delta$, respectivement en temps et fréquence, tels que $T_\Delta F_\Delta < 1$. Autrement dit, le réseau temps-fréquence pour la transmission de symboles de données à valeur réelle devient alors $(T_\Delta T/2, F_\Delta/T)$, i.e. la durée entre deux symboles multiporteuse est $T_\Delta T/2$ et l'espace entre deux porteuses est $F_\Delta/T$, avec $T$ la durée d'un symbole multiporteuse.

Pour réaliser une transmission multiporteuse de type FTN, on introduit selon ce document un bloc de traitement spécifique, dit « FTN mapper » (forme de projection utilisant une fonction gaussienne).

Un inconvénient de cette technique est que les gains effectifs par rapport à la cadence de Nyquist sont assez nettement inférieurs aux gains théoriques. En effet, dans le document cité ci-dessus, le bloc de traitement spécifique effectue, pour chaque sous-porteuse, des traitements par bloc de données temps-fréquence. Ces blocs de taille $N_t \times N_f$ sont préférentiellement choisis, pour un motif de compromis complexité/performance, tels que $N_t = N_f = 3$. Pour pouvoir passer d'un réseau temps-fréquence de type FTN multiporteuse, compressé en temps d'un facteur de compression $T_\Delta$, au réseau habituel de l'OFDM/OQAM, les effets de bord font que ni l'ensemble des M porteuses, ni l'ensemble des K symboles des intervalles temporels, ne pourront être pris en compte. Le problème de gestion des bords s'amenuise pour les très fortes valeurs de M et K mais est très pénalisant pour des valeurs pratiques usuelles.

Ainsi, pour des valeurs de paramètres $N_t = N_f = 3$, $M = 128$ et $K = 16$, si le facteur de compression $T_\Delta$ est égal à 0,9, on obtient en théorie un accroissement de débit de l'ordre de 11%, et en réalité une perte en débit de 8%. Si $K = 10$, cela améliore la flexibilité du système mais diminue encore plus le facteur de compression effectif qui, au lieu de 1,11, devient égal à 0,78.

Un autre inconvénient de cette technique est que le bloc de traitement spécifique introduit une complexité opératoire proportionnelle au nombre de porteuses M et à sa taille ($N_t$, $N_f$). Ainsi le nombre de multiplications par la fonction gaussienne utilisée pour le bloc « FTN mapper » est de l'ordre de $\mathcal{O}$ ($N_t N_f M$).

La technique décrite dans le document « Multicarrier faster than Nyquist transceivers : Hardware architecture and performance analysis » est donc complexe, peu réaliste au niveau de l'implémentation du système, et introduit un délai au niveau de la transmission puisqu'il est nécessaire de projeter ou « mapper » les symboles de données avant de pouvoir les transmettre.

Il existe donc un besoin pour une nouvelle technique de transmission FTN adaptée à un système multiporteuse ne présentant pas l'ensemble des inconvénients de l'art antérieur.

## 3. Exposé de l'invention

L'invention propose une solution nouvelle qui ne présente pas l'ensemble de ces inconvénients de l'art antérieur, sous la forme d'un procédé de modulation de symboles de données, délivrant un signal à porteuses multiples, mettant en oeuvre :

- une étape de transformation mathématique des symboles de données, du domaine fréquentiel vers un domaine temporel, délivrant des symboles transformés ;
- une étape de filtrage polyphase des symboles transformés, délivrant le signal à porteuses multiples.

Selon l'invention, l'étape de filtrage polyphase met en oeuvre un facteur d'expansion tenant compte d'un facteur de compression $\tau$, le facteur de compression $\tau$ étant un nombre compris entre 0 et 1 permettant de transmettre le signal à porteuses multiples à une cadence supérieure à la cadence de Nyquist.

L'invention propose ainsi une nouvelle solution pour la transmission d'un signal multiporteuse au-delà de la cadence de Nyquist (FTN). Il est ainsi possible de réduire le temps de transmission pour un volume d'information donné.

De plus, la transmission FTN sous forme d'un multiplex fréquentiel permet de bénéficier des avantages des systèmes multiporteuses, comme la flexibilité du modulateur (par exemple la possibilité d'éteindre certaines porteuses) ou l'utilisation d'algorithmes efficaces pour l'implémentation du modem (par exemple à base de transformées de Fourier rapide : IFFT - en anglais « Inverse Fast Fourier Transform », ou FFT - en anglais « Fast Fourier Transform »).

La solution proposée offre ainsi une nouvelle technique de modulation permettant une augmentation du débit de transmission dans une bande de fréquence donnée. Elle trouve notamment des applications dans les communications cellulaires, principalement pour la voie montante pour laquelle on peut envisager à la station de base des techniques d'égalisation relativement complexes, mais également pour la voie descendante, si le récepteur est par exemple de type tablette. Elle trouve plus généralement des applications dans tous les domaines nécessitant la transmission de données à haut débit.

En particulier, l'invention peut s'appliquer à des systèmes de modulations multiporteuses satisfaisant initialement soit la condition d'orthogonalité complexe (comme pour l'OFDM), soit la condition d'orthogonalité réelle (comme pour l'OFDM/OQAM). Les symboles de données peuvent donc être de type réels ou complexes.

Par ailleurs, l'invention permet d'approcher de très près le facteur de compression cible. En d'autres termes, il y a peu d'écart entre le facteur de compression théorique et le facteur de compression réel.

Par rapport à la technique décrite dans le document « Multicarrier faster than Nyquist transceivers : Hardware architecture and performance analysis », la solution proposée offre plus de flexibilité, et n'est pas limitée par une taille de bloc (par exemple K symboles par intervalle de temps). De plus, la technique décrite dans ce document nécessite l'utilisation de deux systèmes de fonctions, l'un pour le traitement spécifique (« FTN mapper ») et l'autre pour la modulation, alors qu'un seul système de fonction est nécessaire dans la solution proposée, comme dans les schémas standards de l'OFDM/OQAM, ce qui permet de réduire la complexité de mise en oeuvre.

Selon une caractéristique particulière de l'invention, le facteur d'expansion est égal à l'arrondi entier de $\left[\tau . \frac{M}{2}\right]$ si les symboles de données sont à valeurs réelles, comme pour une modulation de type OFDM/OQAM, et le facteur d'expansion est égal à l'arrondi entier de [$\tau. M$] si les symboles de données sont à valeurs complexes, comme pour une modulation de type OFDM/QAM ou OFDM suréchantillonné, avec M un entier égal à la taille de la transformation mathématique.

L'utilisation d'un tel facteur d'expansion, noté $N_f$, encore appelé facteur FTN, permet de tenir compte du facteur de compression $\tau$ lors de la phase de filtrage polyphase, qui permet de mettre en forme les porteuses (pour obtenir une orthogonalité réelle ou complexe des porteuses si $\tau$ = 1), et contribue donc à la transmission de données à un débit supérieur par rapport aux techniques de l'art antérieur.

Selon un mode de réalisation particulier, le procédé de modulation selon l'invention comprend une étape de pré-traitement des symboles de données, mise en oeuvre préalablement à l'étape de transformation mathématique. Une telle étape de pré-traitement des symboles de données met en oeuvre une multiplication des symboles de données par un terme tenant compte du facteur de compression $\tau$.

Cette étape de pré-traitement est notamment mise en oeuvre si le filtre prototype présente une longueur paire. En revanche, elle est facultative si la longueur du filtre prototype est impaire.

Elle permet de tenir compte du facteur de compression $\tau$ lors de la phase de pré-traitement, et contribue ainsi à la transmission de données haut-débit.

Selon un aspect particulier de l'invention, le procédé de modulation comprend une étape de post-traitement des symboles transformés, mise en oeuvre préalablement à l'étape de filtrage. Cette étape de post-traitement permet notamment de répéter les symboles transformés.

En particulier, lorsque l'étape de transformation mathématique délivre M symboles transformés, avec M un entier, l'étape de post-traitement met en oeuvre une répétition par bloc des M symboles transformés, délivrant $b_1$ blocs de M symboles transformés, avec $b_1$ un entier tel que $b_1 > 0$, et un sous-bloc de $b_2$ symboles transformés, avec $b_2$ un entier tel que $0 \leq b_2 < M$, et l'étape de filtrage polyphase met en oeuvre un filtre prototype de taille $L = b_1M + b_2$ prenant en entrée les $b_1$ blocs de M symboles transformés et le sous-bloc de $b_2$ symboles transformés.

Une telle étape de post-traitement permet ainsi d'utiliser n'importe quel filtre prototype, en adaptant le nombre de symboles transformés à la taille du filtre prototype.

Elle offre donc une grande souplesse au niveau du schéma de modulation.

Par exemple, $b_1$ est égal à 4 et $b_2$ égal à 0. On « recopie » donc quatre fois le bloc de M symboles transformés issu en sortie de l'étape de transformation mathématique.

Selon un autre mode de réalisation particulier, pour une modulation de type OFDM/OQAM et pour des symboles de données à valeurs réelles, l'étape de transformation mathématique met en oeuvre une transformation du domaine fréquentiel vers le domaine temporel comprenant les sous-étapes suivantes :

- application d'une transformée de Fourier inverse partielle aux symboles de données, délivrant un premier sous-ensemble de C symboles transformés ;
- obtention, à partir du premier sous-ensemble, d'un deuxième sous-ensemble de (M-C) symboles transformés, le deuxième sous-ensemble de symboles transformés étant complémentaire du premier sous-ensemble de symboles transformés, pour former l'ensemble des M symboles transformés.

En particulier, si la longueur du filtre prototype $L = b_1M + b_2$ est supérieur à M, l'étape de transformation mathématique met également en oeuvre une sous-étape de répétition et permutation des M symboles transformés, délivrant L symboles transformés, avec L, M et C des entiers tels que $L > M > C$.

On calcule ainsi uniquement une partie des sorties « classiques » d'un module de transformation fréquence/temps, en utilisant un algorithme de type transformée de Fourier partielle, et on déduit le reste des sorties à partir des premières sorties calculées.

De cette façon, on diminue considérablement le nombre d'opérations (multiplications, additions) classiquement effectuées.

Selon une caractéristique particulière de l'invention, le facteur de compression $\tau$ est strictement inférieur à 1. De ce fait, le signal à porteuses multiples issu de l'étape de filtrage polyphase présente une cadence supérieure à la cadence de Nyquist.

Selon un autre aspect de l'invention, le procédé de modulation comprend une étape de mise à jour du facteur d'expansion, tenant compte d'une mise à jour du facteur de compression $\tau$. Par exemple, le facteur de compression $\tau$ peut être adapté selon la qualité du canal de transmission. Une voie de retour peut alors être prévue pour donner au modulateur des informations sur le canal de transmission.

En particulier, pour une modulation de type OFDM/OQAM, les symboles de données sont à valeurs réelles et pour une modulation de type OFDM, les symboles de données sont à valeurs complexes.

Dans un autre mode de réalisation, l'invention concerne un dispositif de modulation de symboles de données, délivrant un signal à porteuses multiples, comprenant :

- un module de transformation mathématique des symboles de données, du domaine fréquentiel vers un domaine transformé, délivrant des symboles transformés ;
- un module de filtrage polyphase des symboles transformés, délivrant le signal à porteuses multiples.

Selon l'invention, un tel module de filtrage polyphase met en oeuvre un facteur d'expansion tenant compte d'un facteur de compression $\tau$, le facteur de compression $\tau$ étant un nombre compris entre 0 et 1 permettant de transmettre le signal à porteuses multiples à une cadence supérieure à la cadence de Nyquist.

Un tel dispositif de modulation est notamment adapté à mettre en oeuvre le procédé de modulation décrit précédemment. Il s'agit par exemple d'une station de base d'un réseau cellulaire pour une communication sur voie descendante, ou d'un terminal de type ordinateur, téléphone, tablette, boîtier décodeur (en anglais « set-top box »), etc., pour une communication sur voie montante. Ce dispositif pourra bien sûr comporter les différentes caractéristiques relatives au procédé de modulation selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

En particulier, un tel dispositif de modulation, encore appelé modulateur, offre une bonne précision pour le signal à porteuse multiples, de l'ordre de celle obtenue par une implémentation directe des équations du signal à porteuse multiples.

De plus, la solution proposée permet la réalisation d'une modulation OFDM/OQAM en utilisant un schéma différent de l'art antérieur, qui peut notamment prendre en entrée des symboles de données à valeurs complexes.

L'invention concerne également un procédé de démodulation d'un signal à porteuses multiples, délivrant des symboles de données estimés, mettant en oeuvre :

- une étape de filtrage polyphase dudit signal à porteuses multiples, délivrant des symboles de données dans le domaine temporel,
- une étape de transformation mathématique de symboles de données dans le domaine temporel, d'un domaine transformé vers le domaine fréquentiel, délivrant des symboles de données dans le domaine fréquentiel ;

Selon l'invention, l'étape de filtrage polyphase met en oeuvre un facteur de décimation tenant compte d'un facteur de compression $\tau$, le facteur de compression $\tau$ étant un nombre compris entre 0 et 1 permettant de transmettre le signal à porteuses multiples à une cadence supérieure à la cadence de Nyquist.

Un tel procédé de démodulation est notamment adapté à démoduler un signal à porteuses multiples modulé selon le procédé de modulation décrit ci-dessus. En particulier, un tel procédé est apte à démoduler un signal multiporteuse reçu à une cadence supérieure à la cadence de Nyquist.

Les caractéristiques et avantages de ce procédé de démodulation sont les mêmes que ceux du procédé de modulation. Par conséquent, ils ne sont pas détaillés plus amplement.

Selon une caractéristique particulière de l'invention, le facteur de décimation est égal à l'arrondi entier de $\left[\tau . \dfrac{M}{2}\right]$ si les symboles de données sont à valeurs réelles avant modulation, comme pour une démodulation de type OFDM/OQAM, et le facteur de décimation est égal à l'arrondi entier de $[\tau . M]$ si les symboles de données sont à valeurs complexes avant modulation, comme pour une démodulation de type OFDM/QAM ou OFDM suréchantillonné, avec M un entier égal à la taille de la transformation mathématique.

L'utilisation d'un tel facteur de décimation, noté $N_f$, encore appelé facteur FTN, permet de tenir compte du facteur de compression $\tau$ lors de la phase de filtrage polyphase, et contribue donc à la réception de données à un débit supérieur par rapport aux techniques de l'art antérieur.

En particulier, le procédé de démodulation comprend une étape facultative de post-traitement des symboles de données dans le domaine fréquentiel, délivrant les symboles de données estimés. L'étape de post-traitement met en oeuvre une multiplication des symboles de données dans le domaine fréquentiel par un terme tenant compte du facteur de compression $\tau$.

Cette étape de post-traitement est notamment mise en oeuvre si le filtre prototype présente une longueur paire. En revanche, elle est facultative si la longueur du filtre prototype est impaire.

Dans un autre mode de réalisation, l'invention concerne un dispositif de démodulation d'un signal à porteuses multiples, délivrant des symboles de données estimés, comprenant :

- un module de filtrage polyphase dudit signal à porteuses multiples, délivrant des symboles de données dans le domaine transformé,
- un module de transformation mathématique desdits symboles de données dans le domaine transformé, d'un domaine transformé vers le domaine fréquentiel, délivrant des symboles de données dans le domaine fréquentiel.

Selon l'invention, le module de filtrage polyphase met en oeuvre un facteur de décimation tenant compte d'un facteur de compression $\tau$, le facteur de compression $\tau$ étant un nombre compris entre 0 et 1 permettant de transmettre le signal à porteuses multiples à une cadence supérieure à la cadence de Nyquist.

Un tel dispositif de démodulation est notamment adapté à mettre en oeuvre le procédé de démodulation décrit précédemment. Il s'agit par exemple d'une station de base d'un réseau cellulaire pour une communication sur voie montante, ou d'un terminal de type ordinateur, téléphone, tablette, boîtier décodeur, etc, pour une communication sur voie descendante. Ce dispositif pourra bien sûr comporter les différentes caractéristiques relatives au procédé de démodulation selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne encore un ou plusieurs programmes d'ordinateur comportant des instructions pour la mise en oeuvre d'un procédé de modulation tel que décrit ci-dessus lorsque ce ou ces programmes sont exécutés par un processeur, et un ou plusieurs programme d'ordinateur comportant des instructions pour la mise en oeuvre d'un procédé de démodulation tel que décrit ci-dessus lorsque ce ou ces programmes sont exécutés par un processeur.

Le procédé selon l'invention peut donc être mis en oeuvre de diverses manières, notamment sous forme câblée ou sous forme logicielle.

L'invention concerne aussi un support d'informations lisible par un ordinateur, et comportant des instructions d'un programme d'ordinateur tel que mentionné ci-dessus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente les principales étapes mises en oeuvre par le procédé de modulation selon un mode de réalisation particulier de l'invention ;
- le figure 2 illustre les principales étapes mises en oeuvre par le procédé de démodulation selon un mode de réalisation particulier de l'invention ;
- les figures 3A à 3D illustrent des exemples de modulateurs OFDM/OQAM permettant de transmettre des données à une cadence supérieure à celle de Nyquist ;
- la figure 4 présente un exemple de démodulateur OFDM/OQAM permettant de recevoir des données à une cadence supérieure à celle de Nyquist ;
- la figure 5 propose un exemple de modulateur OFDM permettant de transmettre des données à une cadence supérieure à celle de Nyquist ;
- la figure 6 illustre un exemple de démodulateur OFDM permettant de recevoir des données à une cadence supérieure à celle de Nyquist ;
- les figures 7 et 8 illustrent respectivement la structure simplifiée d'un modulateur mettant en oeuvre une technique de modulation, et un démodulateur mettant en oeuvre une technique de démodulation selon un mode de réalisation particulier de l'invention.

## 5. Description d'un mode de réalisation de l'invention

*5.1 Principe général*

Le principe général de l'invention repose sur la prise en compte d'un facteur de compression au niveau d'un expanseur/décimateur d'un filtre polyphase d'un modulateur/démodulateur multiporteuse, permettant de transmettre des données à une cadence supérieure à la cadence de Nyquist. On rappelle que, pour un facteur de compression théorique $\tau$, compris entre 0 et 1, il est attendu que par rapport à la cadence dite de Nyquist, le débit soit multiplié par un facteur de $1/\tau$.

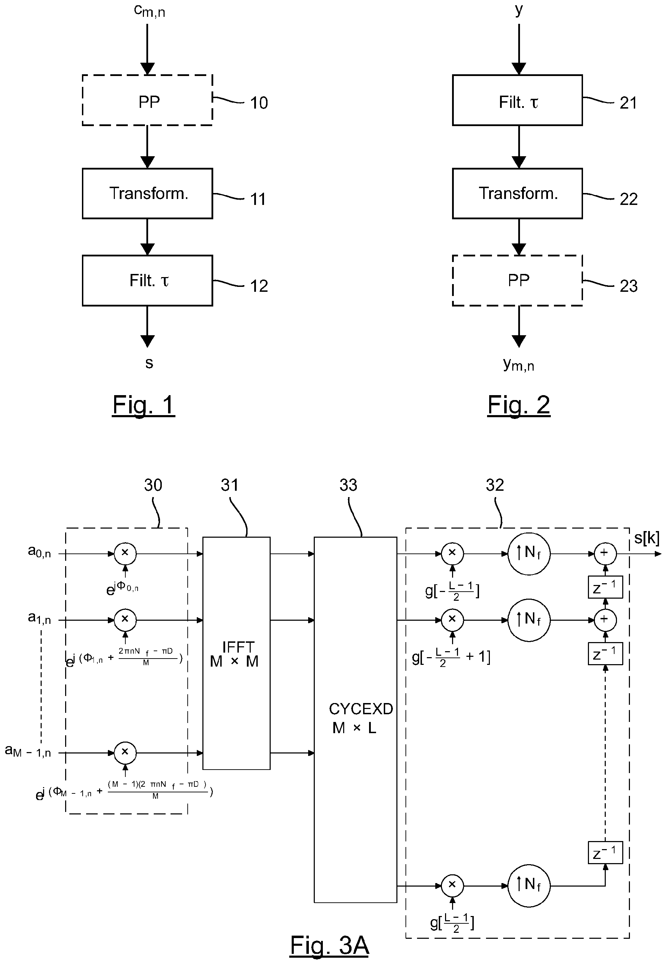

Plus précisément, la figure 1 illustre les principales étapes mises en oeuvre par un procédé de modulation selon un mode de réalisation de l'invention.

Un tel procédé reçoit en entrée des symboles de données, qui peuvent être à valeurs réelles, notés $a_{m,n}$, ou à valeurs complexes, notés $c_{m,n}$.

Ces symboles de données subissent une transformation mathématique 11 du domaine fréquentiel vers un domaine transformé délivrant des symboles transformés. Cette étape peut mettre en oeuvre une transformation classique, de type transformée de Fourier inverse rapide par exemple, ou, si les symboles de données sont à valeurs réelles, une transformation partielle de Fourier délivrant un premier sous-ensemble de symboles transformés, suivie d'une construction d'un deuxième sous-ensemble de symboles transformés à partir du premier sous-ensemble, en adaptant la technique décrite dans la demande de brevet français FR 2 972 091 déposée le 28 février 2011 au nom du même Demandeur.

Les symboles transformés subissent ensuite un filtrage polyphase 12, permettant de mettre en forme les porteuses. En particulier, cette étape de filtrage polyphase met en oeuvre un facteur d'expansion tenant compte d'un facteur de compression $\tau$, le facteur de compression $\tau$ étant un nombre compris entre 0 et 1 permettant de transmettre le signal à porteuses multiples à une cadence supérieure à la cadence de Nyquist.

L'étape de filtrage polyphase permet de mettre en forme les porteuses.

En particulier, si les symboles de données sont à valeurs réelles, le facteur d'expansion est égal à l'arrondi entier de $\left[\tau.\frac{M}{2}\right]$ (i.e. l'entier le plus proche de $\left[\tau.\frac{M}{2}\right]$), avec M un entier égal à la taille de la transformation mathématique. Si les symboles de données sont à valeurs complexes, le facteur d'expansion est égal à l'arrondi entier de $[\tau.M]$ (i.e. l'entier le plus proche de $[\tau.M]$), avec M un entier égal à la taille de la transformation mathématique.

Le signal $s$ obtenu à l'issue de l'opération de filtrage est un signal à porteuses multiples.

En particulier, préalablement à l'étape de transformation des symboles de données, il est possible de mettre en oeuvre une étape de pré-traitement 10. Une telle étape, facultative, permet d'appliquer un déphasage aux symboles de données, et de multiplier les symboles de données par un terme tenant compte du facteur de compression $\tau$. Elle est notamment mise en oeuvre lorsque le filtre prototype présente une longueur paire.

On présente désormais, en relation avec la figure 2, les principales étapes mises en oeuvre par un procédé de démodulation selon l'invention.

Un tel procédé reçoit en entrée un signal à porteuses multiples $y$.

Le signal à porteuses multiples $y$ subit, au cours d'une première étape 21, un filtrage polyphase, délivrant des symboles de données dans le domaine transformé. Un tel filtrage polyphase met en oeuvre un facteur de décimation tenant compte du facteur de compression $\tau$.

En particulier, si les symboles de données avant modulation sont à valeurs réelles (par exemple pour une modulation OFDM/OQAM), le facteur de décimation est égal à l'arrondi entier de $\left[\tau.\frac{M}{2}\right]$. Si les symboles de données avant modulation sont à valeurs complexes (par exemple pour une modulation OFDM ou OFDM suréchantillonné), le facteur de décimation est égal à l'arrondi entier de $[\tau.M]$.

Au cours d'une deuxième étape 22, les symboles de données dans le domaine transformé subissent une transformation mathématique du domaine transformé vers le domaine fréquentiel. Cette étape met en oeuvre un oeuvre une transformation classique, par exemple de type transformation de Fourier rapide.

Si le filtre prototype présente une longueur paire, au cours d'une troisième étape 23, les symboles de données dans le domaine fréquentiel subissent un post-traitement, délivrant des symboles de données estimés $y_{m,n}$. En particulier, cette étape de post-traitement met en oeuvre une multiplication des symboles de données dans le domaine fréquentiel par un terme tenant compte du facteur de compression $\tau$. En revanche, cette étape est facultative si la longueur du filtre prototype est impaire.

### 5.2 Exemples de mise en oeuvre

On décrit ci-après différents exemples de mise en oeuvre de l'invention, pour la modulation et la démodulation de symboles de données à valeurs complexes ou réelles permettant une transmission à une cadence supérieure à celle de Nyquist (FTN).

Un point essentiel est lié à la définition du facteur FTN $N_f$, paramètre que l'on va retrouver dans tous les schémas de réalisation proposés.

### 5.2.1 Notations

On définit ci-après les notations utilisées dans la suite du document :

- $\tau$ : facteur de compression FTN, $0 < \tau \leq 1$ ;
- M : nombre de porteuses, taille de la transformation mathématique, par exemple de type IFFT/FFT;
- $T_e$ : période d'échantillonnage ;
- $F_0 = \dfrac{1}{MT_e}$ : espacement inter-porteuse;
- $T_0 = MT_e$ ;
- L : la longueur du filtre prototype tel que $L = b_1 M + b_2$, avec $b_1$ et $b_2$ des entiers tels que $b_1 \geq 1$ et $0 \leq b_2 \leq M-1$ ;

- $D = L$ - 1 : paramètre de retard introduit pour rendre le système causal ;
- $a_{m,n}$, $c_{m,n}$ : les symboles de données à transmettre, qui peuvent être réels ou complexes.

*5.2.2 Premier exemple de réalisation*

On considère ci-après un premier exemple de réalisation selon lequel on cherche à réaliser un modem OFDM/OQAM permettant une transmission à une cadence supérieure à celle de Nyquist.

En plus des notations précédentes, on définit :

- $N = \frac{M}{2}$ le nombre d'échantillons dus au décalage (« offset ») de l'OQAM;

- $\tau_0 = \frac{M}{2} T_e$

- un facteur FTN $N_f$, tel que $N_f$ soit égal à l'arrondi entier de $\tau \frac{M}{2}$ ;

- un terme de phase $\phi_{m,n}$, tel que par exemple $\phi_{m,n} = \frac{\pi}{2}(m + n) + \epsilon\pi nm$, avec $\varepsilon \in \{-1,0,1\}$, ou $\phi_{m,n} = \frac{\pi}{2}n$, ou toute autre phase.

On note que dans le cas où $\phi_{m,n} = \frac{\pi}{2}n$, le terme de phase ne dépend pas de m, et il n'est pas possible de se rapprocher d'un système orthogonal quand le facteur de compression $\tau$ tend vers 1. Si l'on considère des facteurs de compression élevés (tendant vers 0), le choix du terme de phase importe peu. Il suffit que le récepteur réalise un système d'égalisation qui tienne compte de la loi de phase retenue.

*A) Modulation*

On présente, en relation avec les figures 3A à 3D, quatre modulateurs OFDM/OQAM permettant de transmettre des données à une cadence supérieure à celle de Nyquist.

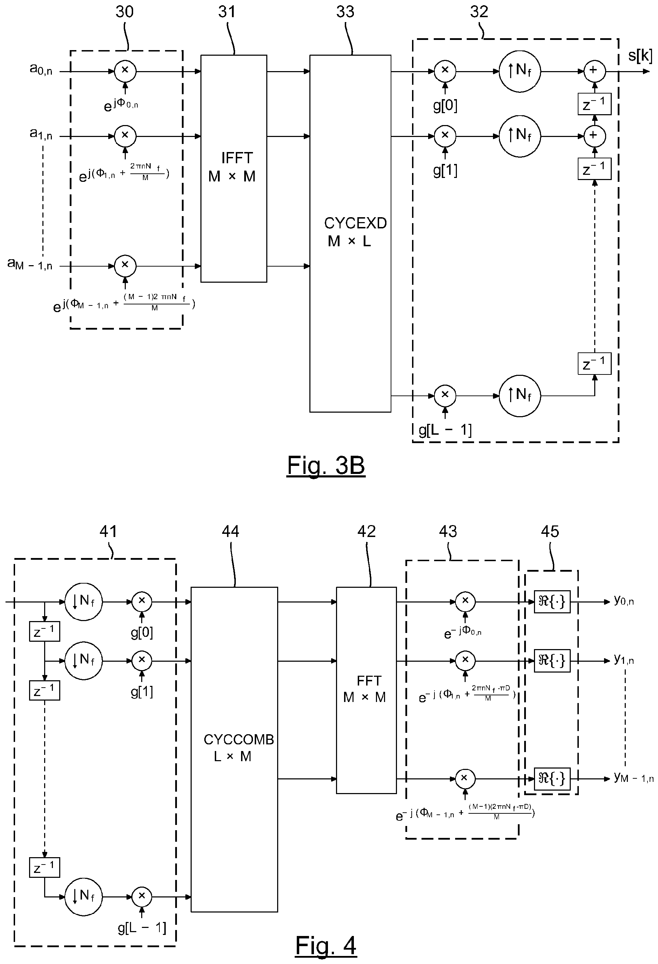

Les deux premiers modulateurs illustrés en figures 3A et 3B mettent en oeuvre des étapes de pré-traitement, transformation mathématique au moyen d'un module de transformée de Fourier inverse classique, et de filtrage polyphase.

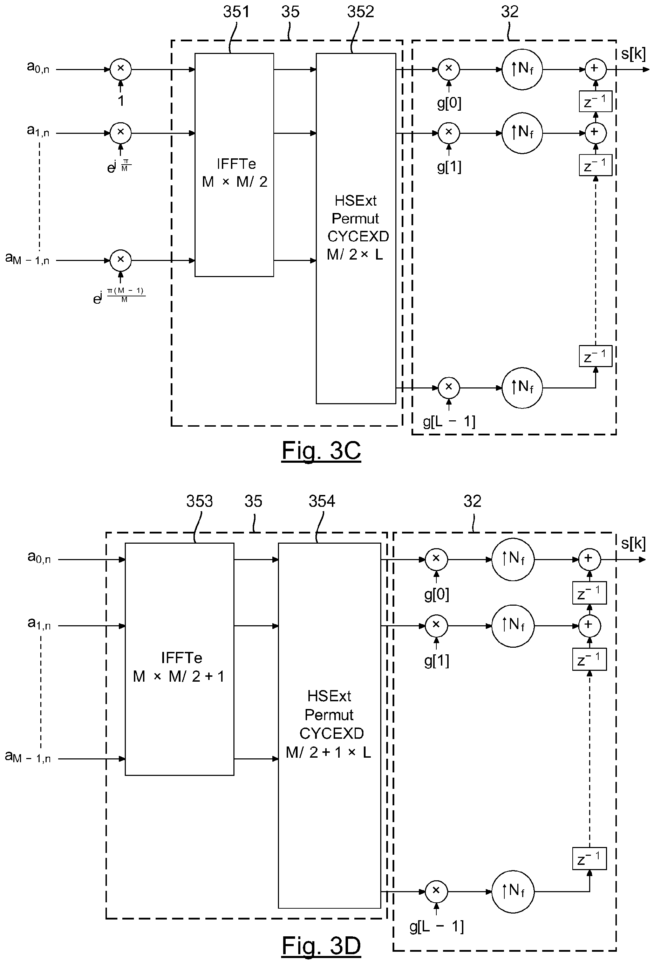

Les deux derniers modulateurs illustrés en figures 3C et 3D mettent en oeuvre des étapes transformation mathématique en adaptant la technique décrite dans la demande de brevet français FR 2 972 091 précitée pour tenir compte du facteur FTN $N_f$, et de filtrage polyphase.

Plus précisément, pour obtenir un modulateur générant un signal à porteuses multiples FTN basé sur une modulation OQAM, les inventeurs ont proposé de modifier l'équation en bande de base du signal OFDM/OQAM.

On rappelle que le signal continu OFDM/OQAM « classique » peut s'écrire en bande de base sous la forme suivante :

$$s(t) = \sum_{m=0}^{M-1} \sum_{n=-\infty}^{+\infty} a_{m,n} f_{m,n}(t)$$

avec $f_{m,n}(t) = g(t - nT_0/2)e^{j2\pi mF_0 t}e^{j\phi_{m,n}}$, et $g$ est le filtre prototype.

Les symboles de données $a_{m,n}$ sont à valeur réelle et peuvent être obtenus à partir d'une constellation de complexe $2^{2K}$-QAM, en prenant tour à tour la partie réelle puis la partie imaginaire.

En échantillonnant à la cadence $T_e = \frac{T_0}{M}$, et en posant $s[k] = s((k - D/2)T_e)$, le signal discret OFDM/OQAM peut s'écrire en bande de base sous la forme suivante :

$$s[k] = \sum_{m=0}^{M-1} \sum_{n\in\mathbb{Z}} a_{m,n} g[k - nN]e^{j\frac{2\pi}{M}m\left(k-\frac{D}{2}\right)}e^{j\phi_{m,n}}$$

Dans le cas d'un système orthogonal (OFDM/OQAM), D est lié à la longueur L du filtre prototype par la relation $D = L$ - 1. Dans le cas orthogonal, c'est la même base de fonctions qui est utilisée à l'émission et à la réception et la contrainte est de vérifier la condition d'orthogonalité réelle qui suit :

$$\langle g_{m,n}, g_{m',n'}\rangle_R = \Re\{\langle g_{m,n}, g_{m',n'}\rangle\} = \Re\left\{\int_{-\infty}^{\infty} g_{m,n}(t)\, g^*_{m',n'}(t)dt\right\} = \delta_{m,m'}\delta_{n,n'}$$

où $\langle .,.\rangle_R$ désigne le produit scalaire réel.

Dans le cas de l'OFDM/OQAM classique, la transmission se fait exactement à la cadence de Nyquist. En d'autres termes, les symboles de données réels $a_{m,n}$ sont transmis à une cadence telle que $\frac{T_0}{2}F_0 = \frac{1}{2}$, ce qui correspond à la condition $T_0F_0 = 1$ pour les symboles de données complexes dont ils sont issus.

Selon l'invention, l'équation en bande de base du signal OFDM/OQAM est modifiée de la façon suivante :

$$s(t) = \sum_{m=0}^{M-1}\sum_{n=-\infty}^{+\infty} a_{m,n}g(t - n\tau\tau_0)e^{j2\pi mF_0 t}e^{j\phi_{m,n}}$$

Après échantillonnage à la cadence $T_e$, on obtient une expression normalisée par rapport à $T_e$, i.e :

$$s[k] = \sum_{m=0}^{M-1}\sum_{n=-\infty}^{+\infty} a_{m,n}g[k - nN_f]e^{j2\pi mk/M}e^{j\phi_{m,n}}$$

Cette expression peut être reformulée comme suit :

$$s[k] = \sum_{n=-\infty}^{+\infty} g[k - nN_f]\sum_{m=0}^{M-1} a_{m,n}e^{j\phi_{m,n}}e^{\frac{j2\pi mk}{M}}$$

Pour simplifier l'implémentation du modulateur, on cherche à implémenter l'étape de transformation sous la forme d'une IFFT. Pour que cette IFFT permette également de générer simplement le signal à porteuses multiples $s[k]$, les inventeurs ont proposé d'apporter des modifications à l'équation précédente.

On peut alors distinguer deux cas, le cas « non causal » qui va correspondre à un schéma théorique assez usuel où le filtre prototype g est supposé centré à l'origine des temps, et le cas « causal » où le filtre prototype n'opère qu'à partir de l'instant 0.

*A.1) Cas non causal*

Dans le premier cas, on considère l'équation ci-dessus et on suppose que le filtre prototype $g[k]$, avec $k \in \left[-\frac{L-1}{2}, \frac{L-1}{2}\right]$, n'est pas causal, c'est-à-dire est centré sur l'origine $k = 0$. On introduit alors un décalage D/2 à l'indice de la transformée de Fourier pour que l'indice causal de la IFFT soit également non causal. En outre, nous limitons les variations de l'indice de la transformée de Fourier à l'intervalle [0, $L$ - 1]. Une façon de réaliser ce processus est de remplacer l'indice $k$ de la transformée de Fourier par $k$ - $nN_f$ + D/2. Ceci conduit à une expression reformulée par :

$$s[k] = \sum_{n=-\infty}^{+\infty} g[k - nN_f]\sum_{m=0}^{M-1} \underbrace{a_{m,n}e^{j\phi_{m,n}}e^{j2\pi m(nN_f-\frac{D}{2})/M}}_{\text{pré}-\text{traitement}}\underbrace{\phantom{\sum}e^{j2\pi m(k-nN_f+\frac{D}{2})/M}}_{}$$
$$\underbrace{\phantom{XXXXXXXXXXXXXXXXXXXXXXXXXXXXXXXXXXX}}_{\text{transformation (+post}-\text{traitement)}}$$
$$\underbrace{\phantom{XXXXXXXXXXXXXXXXXXXXXXXXXXXXXXXXXXXXXXXXX}}_{\text{filtrage}}$$

Un tel modulateur est illustré en figure 3A. Il comprend :

- un module de pré-traitement 30, mettant en oeuvre une multiplication des symboles de données $a_{m,n}$ par un terme de phase $e^{j\phi_{m,n}}$ et un terme tenant compte du facteur de compression $e^{j2\pi m(nN_f - \frac{D}{2})/M}$,

- un module de transformation mathématique 31, mettant en oeuvre une transformée de Fourier rapide inverse, délivrant M symboles transformés,

- un module de post-traitement 33, mettant en oeuvre une répétition cyclique des symboles transformés, délivrant L symboles transformés, et

- un module de filtrage polyphase 32, mettant en oeuvre, pour le i-ième symbole transformé, une multiplication par le coefficient $\left[i - \frac{L-1}{2}\right]$ du filtre prototype g, noté $g\left[i - \frac{L-1}{2}\right]$, une expansion par le facteur FTN $N_f$, et un décalage de $(i+1)z^{-1}$, pour i allant de 0 à $L - 1$.

On note que si L est impair, le module de pré-traitement 30 est facultatif. De plus, si $L = M$, le module de post-traitement 33 est également facultatif.

Ce module de post-traitement 33 est utilisé pour adapter le nombre de symboles transformés en sortie du module de transformation 31 à la taille du filtre prototype.

Plus précisément, la longueur L du filtre prototype étant telle que $L = b_1 M + b_2$, avec $b_1$ et $b_2$ des entiers tels que $b_1 \geq 1$ et $0 \leq b_2 \leq M - 1$, le module de post-traitement 33 met en oeuvre une répétition par bloc des M symboles transformés, délivrant $b_1$ blocs de M symboles transformés et un sous-bloc de $b_2$ symboles transformés.

Le module de post-traitement 33, encore appelé bloc d'extension cyclique CYCEXD, peut se décrire mathématiquement par une matrice $L \times M$ de la forme :

$$CYCEXD_{L \times M} = \begin{bmatrix} I_{M \times M} \\ \cdots \\ I_{M \times M} \end{bmatrix}_{L \times M}$$

où I désigne la matrice identité.

Par exemple, si l'on souhaite utiliser un filtre prototype classique de type Iota, on peut choisir $b_1 = 4$ et $b_2 = 0$. Si l'on souhaite utiliser un filtre prototype classique de type TFL, on peut choisir $b_1 = 1$ et $b_2 = 0$.

Ainsi, grâce à la propriété de périodicité de la transformée de Fourier, il est possible de réaliser une opération de filtrage avec une extension cyclique par bloc, suivie d'une opération de multiplication à un seul coefficient, suivie encore d'une conversion parallèle-à-série.

Le module de filtrage polyphase 32 est classique, et son fonctionnement n'est pas décrit plus en détail.

*A.2) Cas causal*

Dans le deuxième cas, on modifie légèrement l'équation reformulée du signal à porteuses multiples $s[k]$ de la façon suivante :

$$s[k] = \sum_{n=0}^{+\infty} g[k - nN_f] \sum_{m=0}^{M-1} a_{m,n} e^{j\phi_{m,n}} e^{j2\pi mk/M}$$

où on suppose que le filtre prototype $g[k]$, avec $k \in [0, L - 1]$, est causal, c'est-à-dire démarre à l'indice $k = 0$. Ainsi, il n'est plus nécessaire d'introduire un décalage D/2 à l'indice de la transformée de Fourier, et il est possible d'exprimer le signal $s[k]$ comme suit :

$$s[k] = \sum_{n=0}^{+\infty} g[k - nN_f] \sum_{m=0}^{M-1} \underbrace{\underbrace{a_{m,n} e^{j\phi_{m,n}} e^{j2\pi m(nN_f - D/2)/M}}_{\text{pré-traitement}} e^{j2\pi m(k - nN_f)/M}}_{\substack{\text{transformation (+post-traitement)} \\ \text{filtrage}}}$$

Un tel modulateur est illustré en figure 3B. Il comprend :

- un module de pré-traitement 30, mettant en oeuvre une multiplication des symboles de données $a_{m,n}$ par un terme de phase $e^{j\phi_{m,n}}$ et un terme tenant compte du facteur de compression $e^{j2\pi m(nN_f-\frac{D}{2})/M}$,

- un module de transformation mathématique 31, mettant en oeuvre une transformée de Fourier rapide inverse, délivrant M symboles transformés,

- un module de post-traitement 33, mettant en oeuvre une répétition cyclique des symboles transformés, délivrant L symboles transformés, et

- un module de filtrage polyphase 32, mettant en oeuvre, pour le i-ième symbole transformé, une multiplication par le i-ième coefficient du filtre prototype g, noté $g[i]$, une expansion par le facteur FTN $N_f$, et un décalage de $(i + 1)z^{-1}$, pour i allant de 0 à $L - 1$.

A nouveau, on note que si L est impair, le module de pré-traitement 30 est facultatif, et si $L = M$, le module de post-traitement 33 est facultatif. Les structures des modulateurs non-causal (figure 3A) et causal (figure 3B) sont similaires, seuls les indices du filtre prototype g étant modifiés dans le module de filtrage 32. Le fonctionnement des différents modules n'est donc pas repris en détail.

On note que les deux modulateurs illustrés en figures 3A et 3B peuvent traiter des symboles de données complexes $c_{m,n}$, plutôt que des symboles de données réels $a_{m,n}$. On propose ainsi une nouvelle structure de modulateurs OFDM/OQAM pouvant fonctionner avec des complexes, soit au double de la cadence de Nyquist si le facteur de compression $\tau$ est égal à 1, ou soit au-delà du double de la cadence de Nyquist si le facteur de compression $\tau$ est inférieur à 1.

On présente désormais, en relation avec les figures 3C et 3D, d'autres exemples d'implémentation du modulateur, mettant en oeuvre des étapes de transformation mathématique en adaptant la technique décrite dans la demande de brevet français FR 2 972 091 précitée, et de filtrage polyphase.

On se place dans l'exemple illustré dans le contexte d'un filtre causal et de symboles de données réels. Toutefois, il est possible d'appliquer la solution décrite ci-dessous dans le contexte d'un filtre non-causal.

Plus précisément, on considère à nouveau l'équation ci-dessus du signal à porteuses multiples :

$$s[k] = \sum_{n=0}^{+\infty} g[k - nN_f] \sum_{m=0}^{M-1} a_{m,n} e^{j\phi_{m,n}} e^{j2\pi m(nN_f-D/2)/M} e^{j2\pi m(k-nN_f)/M}$$

En tirant parti d'une propriété de symétrie en sortie de l'IFFT, la modulation multiporteuse OQAM à cadence FTN peut s'effectuer à partir d'une IFFT partielle, encore appelée IFFT élaguée et notée IFFTe, et ne nécessite donc pas une IFFT complète. Ce nouveau schéma aboutit à une réduction de la complexité opératoire d'un facteur de l'ordre de 2.

On considère ci-après deux cas, selon la valeur du terme de phase $\phi_{m,n}$.

Dans un premier cas, on considère $\phi_{m,n} = \frac{\pi n}{2}$.

En reprenant l'équation ci-dessus du signal à porteuses multiples, et en considérant $D = L - 1 = b_1 M + b_2 - 1$, on peut réécrire $s[k]$ comme suit :

$$s[k] = \sum_{n=0}^{+\infty} g[k - nN_f] \sum_{m=0}^{M-1} a_{m,n} e^{j\frac{\pi n}{2}} e^{j2\pi m(nN_f-D/2)/M} e^{j2\pi mk_1/M}$$

$$s[k] = \sum_{n=0}^{+\infty} g[k - nN_f] e^{j\frac{\pi n}{2}} \sum_{m=0}^{M-1} a_{m,n} e^{-j\pi m(b_2-1)/M} e^{j2\pi mk_2/M}$$

avec $k_1 = k - nN_f \in [0, L - 1]$ et $k_2 = k_1 + nN_f - b_1N$.

Si $b_2 - 1$ est impair, c'est-à-dire $b_2 - 1 = 2q - 1$ avec $q \in \mathbb{N}$, alors l'équation précédente peut être reformulée comme suit :

$$s[k] = \sum_{n=0}^{+\infty} g\big[k - nN_f\big] e^{j\frac{\pi n}{2}} \underbrace{\underbrace{\sum_{m=0}^{M-1} a_{m,n} e^{j\pi m/M}}_{\text{IFFTe+HSExt}} e^{j2\pi mk_2/M}}_{\substack{\text{permut+CYCEXD}}}$$
$$\underbrace{\phantom{s[k] = \sum_{n=0}^{+\infty} g\big[k - nN_f\big] e^{j\frac{\pi n}{2}} \sum a}}_{\text{filtrage}}$$

où les indices sont tels que $k_1 = k - nN_f \in [0, L - 1]$ et $k_2 = k_1 + nN_f - b_1N - q.$

Un modulateur permettant de générer un tel signal $s[k]$ est illustré en figure 3C. Il comprend :

- un module de transformation mathématique 35, mettant en oeuvre une transformée de Fourier rapide inverse partielle, délivrant C symboles transformés, une reconstruction des (M-C) symboles transformés, délivrant l'ensemble des symboles transformés, et si $M \neq L,$ une permutation et répétition des symboles transformés, délivrant L symboles transformés,
- un module de filtrage polyphase 32, mettant en oeuvre, pour le i-ième symbole transformé, une multiplication par le i-ième coefficient du filtre prototype $g$, noté $g[i],$ une expansion par le facteur FTN $N_f,$ et un décalage de $(i + 1)z^{-1},$ pour i allant de 0 à $L - 1.$

On détaille ci-après le principe du module de transformation mathématique 35.

On applique tout d'abord une transformée de Fourier rapide inverse partielle, dans un module IFFTe 351, aux M symboles de données multipliés par le terme $e^{j\pi m/M},$ pour m allant de 0 à $M - 1$. On obtient $M/2$ symboles transformés. On note que le module IFFTe peut mettre en oeuvre différents algorithmes IFFT connus.

On note $U_n$ le vecteur obtenu en sortie de ce module 351, tel que :

$$U_n[k_1] = \sum_{m=0}^{M-1} a_{m,n} e^{j\pi m/M} e^{j2\pi mk_1/M}$$

pour $k_1 = 0, \dots, \frac{M}{2} - 1.$

On reconstruit ensuite l'ensemble des M symboles transformés dans un module HSExt-Permut-CYCEXD 352, en appliquant une symétrie hermitienne :

$$U_n[M - 1 - k_1] = U_n^*[k_1]$$

pour $k_1 = 0, \dots, \frac{M}{2} - 1.$

Si $M \neq L,$ on applique une permutation et une répétition des symboles transformés, délivrant L symboles transformés, telles que :

$$U_n[k_2] = U_n\big[\mathrm{mod}(k_1 + nN_f - b_1N - q), M\big]$$

pour $k_1 = 0, \dots, M - 1,$
soit encore :

$U_n[k_2] = U_n[\mathrm{mod}(k_2,M)]$ pour $k_2 = 0, \dots, L - 1$ et $n$ pair,

$U_n[k_2] = -U_n^*[\mathrm{mod}(k_2, M)]$ pour $k_2 = 0, \dots, L - 1$ *et n* impair.

On obtient ainsi L symboles transformés entrant dans le module de filtrage polyphase 32.

Le fonctionnement du module de filtrage polyphase 32 est classique, et n'est pas décrit plus en détail.

Si $b_2 - 1$ est pair, c'est-à-dire $b_2 - 1 = 2q$ avec $q \in \mathbb{N}$, alors l'équation précédente de $s[k]$ peut être reformulée comme suit :

$$s[k] = \sum_{n=0}^{+\infty} g[k - nN_f]\, e^{j\frac{\pi n}{2}} \underbrace{\underbrace{\sum_{m=0}^{M-1} a_{m,n}\, e^{j2\pi mk_2/M}}_{\text{IFFTe+HSExt}}}_{\substack{\text{permut+CYCEXD} \\ \text{filtrage}}}$$

où les indices sont tels que $k_1 = k - nN_f \in [0, L - 1]$ et $k_2 = k_1 + nN_f - b_1N - q.$

Un modulateur permettant de générer un tel signal s[k] est illustré en figure 3D. Il comprend :

- un module de transformation mathématique 35, mettant en oeuvre une transformée de Fourier rapide inverse partielle, délivrant C symboles transformés, une reconstruction des (M-C) symboles transformés, délivrant l'ensemble des symboles transformés, et si $M \neq L,$ une permutation et répétition des symboles transformés, délivrant L symboles transformés,
- un module de filtrage polyphase 32, mettant en oeuvre, pour le i-ième symbole transformé, une multiplication par le i-ième coefficient du filtre prototype g, noté $g[i],$ une expansion par le facteur FTN $N_f,$ et un décalage de $(i + 1)z^{-1},$ pour i allant de 0 à $L$ - $1.$

On détaille ci-après le principe du module de transformation mathématique 35 dans ce cas.

On applique tout d'abord une transformée de Fourier rapide inverse partielle, dans un module IFFTe 353, aux M symboles de données. On obtient ainsi $\frac{M}{2} + 1$ symboles transformés. A nouveau, on note que le module IFFTe peut mettre en oeuvre différents algorithmes IFFT connus.

On note Un le vecteur obtenu en sortie de ce module 353, tel que :

$$U_n[k_1] = \sum_{m=0}^{M-1} a_{m,n} e^{j2\pi mk_1/M}$$

pour $k_1 = 0, \dots, \frac{M}{2}.$

On reconstruit ensuite l'ensemble des M symboles transformés dans un module HSExt-Permut-CYCEXD 354, en appliquant une symétrie hermitienne :

$$U_n[M - k_1] = U_n^*[k_1]$$

pour $k_1 = 1, \dots, \frac{M}{2} - 1.$

Si $M \neq L,$ on applique une permutation et une répétition des symboles transformés, délivrant L symboles transformés, telles que :

$$U_n[k_2] = U_n\big[\mathbf{mod}(k_1 + nN_f - b_1N - q, M)\big]$$

pour $k_1 = 0, \dots, M$ - $1.$

On obtient ainsi L symboles transformés, entrant dans le module de filtrage polyphase 32. A nouveau, le fonctionnement du module de filtrage polyphase 32 est classique, et n'est pas décrit plus en détail.

On considère désormais un deuxième cas, dans lequel le terme de phase est égal à $\phi_{m,n} = \frac{\pi(n+m)}{2}.$

Dans ce cas, qui permet de restaurer l'orthogonalité à faible facteur de compression, le signal à porteuses multiples $s[k]$ garde les mêmes expressions que définies précédemment pour les cas $b_2$ - $1$ impair et pair, avec une différence au niveau des indices :

- si $b_2$ - $1$ est impair :

$$s[k] = \sum_{n=0}^{+\infty} g\big[k - nN_f\big] \, e^{j\frac{\pi n}{2}} \underbrace{\underbrace{\sum_{m=0}^{M-1} a_{m,n} e^{j\pi m/M} \, e^{j2\pi m k_2/M}}_{\text{IFFTe+HSExt}}}_{\underbrace{\hspace{4cm}}_{\text{permut+CYCEXD}}}$$

$$\underbrace{\hspace{7cm}}_{\text{filtrage}}$$

- si $b_2$ - **1** est pair :

$$s[k] = \sum_{n=0}^{+\infty} g\big[k - nN_f\big] \, e^{j\frac{\pi n}{2}} \underbrace{\underbrace{\sum_{m=0}^{M-1} a_{m,n} \, e^{j2\pi m k_2/M}}_{\text{IFFTe+HSExt}}}_{\underbrace{\hspace{4cm}}_{\text{permut+CYCEXD}}}$$

$$\underbrace{\hspace{7cm}}_{\text{filtrage}}$$

où les indices sont tels que $k_1 = k$ - $nN_f \in$ **[0, $L$ - 1]** et $k_2 = k_1 + \frac{M}{4} + nN_f - b_1 N - q$.

Les opérations de transformation de Fourier rapide inverse partielle et de reconstruction de l'ensemble des symboles transformés sont identiques au cas précédent, et ne sont pas décrites plus en détail.

En revanche, la permutation et répétition des symboles transformés, délivrant L symboles transformés, met en oeuvre la fonction suivante :

$$U_n[k_2] = U_n\left[\mathbf{mod}\Big(k_1 + \frac{M}{4} + nN_f - b_1N - q, M\Big)\right]$$

pour $k_1 = 0, ..., M$ - **1.**

Le reste du traitement est identique, et n'est pas décrit plus en détail.

*B) Démodulation*

On présente ci-après, en relation avec la figure 4, un démodulateur OFDM/OQAM permettant de recevoir des données à une cadence supérieure à celle de Nyquist.

Un tel démodulateur met en oeuvre un traitement inverse à celui effectué par le modulateur.

En particulier, en supposant que les symboles de données $a_{m,n}$ sont des réels, l'expression générale pour le démodulateur est donnée par :

$$y_{m_0,n_0} = \Re\left\{\sum_k s[k] \, g_{m_0,n_0}[k]\right\}$$

où l'indice $(m_0,n_0)$ correspond à la position de démodulation ciblée dans le plan temps-fréquence. L'intervalle de variation de l'indice k dépend du fait que le système soit supposé causal ou non. Dans ce qui suit, nous dérivons la structure du démodulateur dans le cas causal. Le cas non-causal se déduit aisément du cas causal.

En définissant $g_{m_0,n_0}[k]$ dans l'équation ci-dessus, on obtient :

$$y_{m_0,n_0} = \Re\left\{\sum_k s[k] \, g\big[k - n_0N_f\big] e^{-j\phi_{m_0,n_0}} e^{\frac{j2\pi m_0(k-D/2)}{M}}\right\}$$

Il reste alors à déterminer l'intervalle de variation de k dans la partie de sommation. Avec l'hypothèse que le filtre prototype $g[k]$ est un filtre causal de longueur L, la somme est limitée à $k \in$ **[$n_0N_f$, $n_0N_f$ + $L$ - 1].** De la même manière que pour le modulateur, il est nécessaire de limiter la variation de l'indice de la transformée de Fourier à [**0, M - 1**] pour pouvoir appliquer une FFT classique et sa règle de périodicité.

En conséquence, les inventeurs ont proposé les modifications suivantes :

$$y_{m_0,n_0}$$

$$= \Re\left\{ \underbrace{\sum_{k=n_0N_f}^{n_0N_f+M-1} \underbrace{\sum_{l=0}^{L/M} s[k+lM]g[k+lM-n_0N_f]}_{filtrage+CYCCOMB} e^{\frac{j2\pi m_0(k-n_0N_f)}{M}}}_{FFT} \underbrace{e^{-j\phi_{m_0,n_0}} e^{-j2\pi m_0(n_0N_f-D/2)/M}}_{post-traitement} \right\}$$

Un tel démodulateur est illustré en figure 4. Il comprend :

- un module de filtrage polyphase 41, mettant en oeuvre un décalage de (**i** + **1)z⁻¹**, une décimation par le facteur FTN $N_f$, une multiplication par le coefficient **[i]** du filtre prototype $g$, noté **g[i]**, pour i allant de 0 à **L - 1,** délivrant L symboles de données dans le domaine transformé;
- un module de pré-traitement 44, mettant en oeuvre une extraction de M symboles de données dans le domaine transformé (par exemple temporel) ;
- un module de transformation mathématique 42, mettant en oeuvre une transformée de Fourier rapide, délivrant M symboles de données dans le domaine fréquentiel,
- un module de post-traitement 43, mettant en oeuvre une multiplication des symboles de données dans le domaine fréquentiel par un terme de phase $e^{-j\phi_{m,n}}$ et un terme tenant compte du facteur de compression $e^{-j2\pi m(nN_f-\frac{D}{2})/M}$, et
- un module d'extraction de la partie réelle 45.

On note que si **L = M,** le module de pré-traitement 44 est facultatif.

De la même façon, si L est impair, le module de post-traitement 43 est facultatif.

Finalement, si les symboles de données modulés sont complexes et non réels, le module d'extraction de la partie réelle 45 est aussi facultatif.

Le module de pré-traitement 44 est utilisé pour adapter le nombre de symboles de données dans le domaine transformé en sortie du module de filtrage 41 à la taille du module de transformation mathématique.

Plus précisément, le module de pré-traitement 44, encore appelé bloc de combinaison cyclique CYCCOMB, met en oeuvre une extraction d'un bloc de M symboles de données dans le domaine transformé.

Le module de pré-traitement 44 peut se décrire mathématiquement par une matrice **M** × **L** qui est la transposée de la matrice CYCEXD :

$$CYCCOMB_{M\times L} = CYCEXD_{L\times M}^T$$

Le fonctionnement des autres modules est classique. Ils ne sont donc pas décrits plus en détail.

Un tel démodulateur est notamment adapté à démoduler un signal à porteuses multiples construit en utilisant le modulateur selon l'une quelconque des figures 3A à 3D.

*5.2.3 Deuxième exemple de réalisation*

On considère ci-après un deuxième exemple de réalisation selon lequel on cherche à réaliser un modem OFDM permettant une transmission à une cadence supérieure à celle de Nyquist.

Dans ce contexte, les symboles de données peuvent être des complexes, notés $c_{m,n}$.

En plus des notations précédentes, on définit un facteur FTN $N_f$, tel que $N_f$ soit égal à l'arrondi entier de $\tau M$.

*A) Modulation*

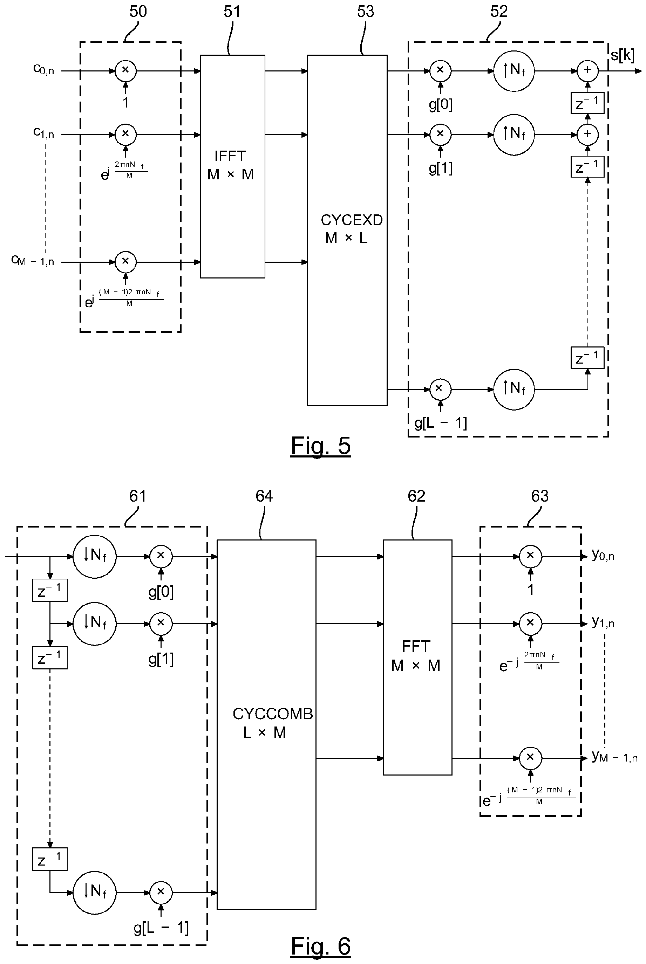

On présente, en relation avec la figure 5, un modulateur OFDM permettant de transmettre des données à une cadence supérieure à celle de Nyquist.

Plus précisément, pour obtenir un modulateur générant un signal à porteuses multiples FTN basé sur une modulation OFDM (i.e. présentant une orthogonalité complexe si $\tau = 1$), les inventeurs ont proposé de modifier l'équation en bande de base du signal OFDM.

On rappelle que, pour une modulation OFDM sur M porteuses, on veut transmettre des symboles de données complexes $c_{m,n}$ ($m \in I = \{0, ...., M - 1\}$ et $n \in \mathbb{Z}$). Les représentations usuelles pour ces symboles correspondent aux alphabets utilisés pour les modulations d'amplitude comme la QAM ou encore la PSK (Phase Shift Keying).

Le signal OFDM classique s'écrit en bande de base :

$$s(t) = \sum_{m=0}^{M-1} \sum_{n=-\infty}^{+\infty} c_{m,n} f_{m,n}(t)$$

- avec $f_{m,n}(t) = f(t - nT_0)e^{j2\pi mF_0 t}e^{j\theta_{m,n}}$ et
- $f(t)$ une fonction de carré intégrable encore appelée fonction prototype ;
- $T_0$ la durée d'un symbole multiporteuse ;
- $F_0$ l'espacement entre deux porteuses successives ;
- $\theta_{m,n}$ un terme de phase qui peut être choisi arbitrairement ;
- $j^2 = -1$.

Dans ce contexte, la condition d'orthogonalité, c'est-à-dire celle permettant de minimiser l'erreur en présence d'une perturbation de type AWGN, est réalisée en considérant en réception le filtre adapté. Autrement dit le produit scalaire des fonction de base, utilisées à la fois pour la modulation et la démodulation doit être tel que :

$$\langle f_{m,n}, f_{m',n'} \rangle = \int_{-\infty}^{\infty} f_{m,n}(t) f_{m',n'}^*(t) dt = \delta_{n,n'} \delta_{m,m'}$$

Si en plus d'un système orthogonal, on souhaite transmettre à la cadence de Nyquist, il faut imposer que $F_0 T_0$ = 1. Autrement dit pour chaque porteuse m on doit vérifier la condition de Nyquist vue précédemment (WT = 1/2). La différence dans le facteur multiplicatif (1/2) provient du fait que dans le cas présent, on considère la transmission de symboles de données complexes et non réels.

Selon l'invention, afin de transmettre des données à une cadence supérieure à la cadence de Nyquist, l'équation en bande de base du signal OFDM est modifiée de la façon suivante :

$$s(t) = \sum_{m=0}^{M-1} \sum_{n=-\infty}^{+\infty} c_{m,n} g(t - n\tau T_0)e^{j2\pi mF_0 t}$$

En échantillonnant à la cadence $T_e$, le signal discret OFDM, normalisé par rapport à la cadence $T_e$, peut s'écrire en bande de base sous la forme suivante :

$$s[k] = \sum_{m=0}^{M-1} \sum_{n=-\infty}^{+\infty} c_{m,n} g[k - nN_f]e^{j2\pi mk/M}$$

$$s[k] = \sum_{n=0}^{+\infty} g[k - nN_f] \underbrace{\underbrace{\sum_{m=0}^{M-1} \underbrace{c_{m,n} e^{j2\pi mnN_f/M}}_{\text{pré-traitement}} e^{j2\pi m(k-nN_f)/M}}_{\text{IFFT+CYCEXD}}}_{\text{filtrage}}$$

Dans ce qui suit, nous dérivons la structure du modulateur dans le cas causal. Le cas non-causal se déduit aisément du cas causal.

Un tel modulateur est illustré en figure 5. Il comprend :

- un module de pré-traitement 50, mettant en oeuvre une multiplication des symboles de données $c_{m,n}$ par un terme tenant compte du facteur de compression $e^{j2\pi mnN_f/M}$,
- un module de transformation mathématique 51, mettant en oeuvre une transformée de Fourier rapide inverse, délivrant M symboles transformés,
- un module de post-traitement 53, mettant en oeuvre une répétition cyclique des symboles transformés, délivrant L symboles transformés, et
- un module de filtrage polyphase 52, mettant en oeuvre, pour le i-ième symbole transformé, une multiplication par le i-ième coefficient du filtre prototype g, noté $g[i]$, une expansion par le facteur FTN $N_f$, et un décalage de $(i + 1)z^{-1}$, pour i allant de 0 à $L$ - $1$.

Comme dans les exemples précédents, on note que L est impair, le module de pré-traitement 50 est facultatif. De plus, si $L = M$, le module de post-traitement 53 est facultatif.

Le fonctionnement des différents modules a d'ores et déjà été décrit en relation avec les figures 3A à 3D. Il n'est donc pas repris ici.

*B) Démodulation*

On présente ci-après, en relation avec la figure 6, un démodulateur OFDM permettant de recevoir des données à une cadence supérieure à celle de Nyquist.

Un tel démodulateur met en oeuvre un traitement inverse à celui effectué par le modulateur.

L'expression générale pour le démodulateur est donnée par :

$$y_{m_0,n_0} = \sum_k s[k]\, g_{m_0,n_0}[k]$$

où l'indice ($m_0,n_0$) correspond à la position de démodulation ciblée dans le plan temps-fréquence. L'intervalle de variation de l'indice k dépend du fait que le système soit supposé causal ou non. Dans ce qui suit, nous dérivons la structure du démodulateur dans le cas causal. Le cas non-causal se déduit aisément du cas causal.

En définissant $g_{m_0,n_0}[k]$ dans l'équation ci-dessus, on obtient :

$$y_{m_0,n_0} = \underbrace{\sum_{k=n_0N_f}^{n_0N_f+M-1} \underbrace{\sum_{l=0}^{L/M} s[k+lM]g[k+lM-n_0N_f]}_{\text{filtrage+CYCOMB}} e^{-j2\pi m_0(k-n_0N_f)/M}}_{\text{FFT}} \underbrace{e^{-j2\pi m_0n_0N_f/M}}_{\text{post-traitement}}$$

Un tel démodulateur est illustré en figure 6. Il comprend :

- un module de filtrage polyphase 61, mettant en oeuvre un décalage de $(i + 1)z^{-1}$, une décimation par le facteur FTN $N_f$, une multiplication par le coefficient $[i]$ du filtre prototype g, noté $g[i]$, pour i allant de 0 à $L$ - $1$, délivrant L symboles de données dans le domaine transformé ;
- un module de pré-traitement 64, mettant en oeuvre une extraction de M symboles de données dans le domaine transformé (par exemple temporel) ;
- un module de transformation mathématique 62, mettant en oeuvre une transformée de Fourier rapide, délivrant M symboles de données dans le domaine fréquentiel ; et
- un module de post-traitement 63, mettant en oeuvre une multiplication des symboles de données dans le domaine fréquentiel par un terme tenant compte du facteur de compression $e^{-j2\pi mnN_f/M}$.

On note que si $L = M$, le module de pré-traitement 64 est facultatif.

De la même façon, si L est impair, le module de post-traitement 63 est facultatif.

Le fonctionnement de l'ensemble des modules est similaire à celui décrit en relation avec la figure 4. Ils ne sont donc pas décrits plus en détail.

En particulier, un tel démodulateur est adapté à démoduler un signal à porteuses multiples construit en utilisant le modulateur de la figure 5.

*5.3 Structure du modulateur ou du démodulateur*

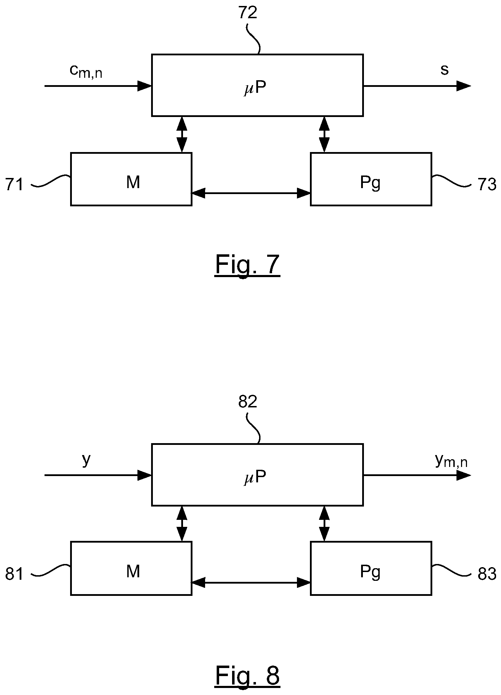

On présente finalement, en relation avec les figures 7 et 8 respectivement, la structure simplifiée d'un modulateur mettant en oeuvre une modulation d'un signal à porteuses multiples et la structure d'un démodulateur mettant en oeuvre une démodulation d'un signal à porteuses multiples selon un mode de réalisation particulier de l'invention.

Comme illustré en figure 7, un tel modulateur comprend une mémoire 71 comprenant une mémoire tampon, une unité de traitement 72, équipée par exemple d'un microprocesseur $\mu$P, et pilotée par le programme d'ordinateur 73, mettant en oeuvre le procédé de modulation selon un mode de réalisation de l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée des symboles de données, réels $a_{m,n}$ ou complexes $c_{m,n}$. Le microprocesseur de l'unité de traitement 72 met en oeuvre les étapes du procédé de modulation décrit précédemment, selon les instructions du programme d'ordinateur 73, pour générer un signal à porteuses multiples. Pour cela, le modulateur comprend, outre la mémoire tampon 71, un module de transformation mathématique des symboles de données, du domaine fréquentiel vers un domaine transformé, et un module de filtrage polyphase des symboles transformés, mettant en oeuvre un facteur d'expansion tenant compte d'un facteur de compression $\tau$.

Ces modules sont pilotés par le microprocesseur de l'unité de traitement 72.

Comme illustré en figure 8, un tel démodulateur a quant à lui une mémoire 81 comprenant une mémoire tampon, une unité de traitement 82, équipée par exemple d'un microprocesseur $\mu$P, et pilotée par le programme d'ordinateur 82, mettant en oeuvre le procédé de démodulation selon un mode de réalisation de l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal à porteuses multiples. Le microprocesseur de l'unité de traitement 82 met en oeuvre les étapes du procédé de démodulation décrit précédemment, selon les instructions du programme d'ordinateur 83, pour estimer les symboles de données transmis. Pour cela, le dispositif de démodulation comprend, outre la mémoire tampon 81, un module de filtrage polyphase du signal à porteuses multiples, délivrant des symboles de données dans le domaine transformé, un module de transformation mathématique des symboles de données dans le domaine transformé, d'un domaine transformé vers le domaine fréquentiel, délivrant des symboles de données dans le domaine fréquentiel et un module de post-traitement des symboles de données dans le domaine fréquentiel, délivrant les symboles de données estimés. Le module de post-traitement met en oeuvre une multiplication des symboles de données dans le domaine fréquentiel par un terme tenant compte d'un facteur de compression $\tau$, et le module de filtrage polyphase met en oeuvre un facteur de décimation tenant compte du facteur de compression $\tau$.

Ces modules sont pilotés par le microprocesseur de l'unité de traitement 82.

## Revendications

**1.** Procédé de modulation de symboles de données, délivrant un signal à porteuses multiples, mettant en oeuvre :

- une étape de transformation mathématique (11) des symboles de données, du domaine fréquentiel vers un domaine temporel, délivrant des symboles transformés ;
- une étape de filtrage polyphase (12) desdits symboles transformés, délivrant ledit signal à porteuses multiples,

**caractérisé en ce que** ladite étape de filtrage polyphase (12) met en oeuvre un facteur d'expansion tenant compte d'un facteur de compression $\tau$,
ledit facteur de compression $\tau$ étant un nombre compris entre 0 et 1, ledit facteur d'expansion étant égal à l'arrondi entier de $\left[\tau.\frac{M}{2}\right]$ si lesdits symboles de données sont à valeurs réelles, et étant égal à l'arrondi entier de $[\tau.M]$ si lesdits symboles de données sont à valeurs complexes, avec M un entier égal au nombre de porteuse et à la taille de ladite transformation mathématique.

**2.** Procédé de modulation selon la revendication 1, **caractérisé en ce qu'**il comprend une étape de pré-traitement (10) desdits symboles de données, mise en oeuvre préalablement à ladite étape de transformation mathématique (11), et **en ce que** ladite étape de pré-traitement (10) met en oeuvre une multiplication desdits symboles de données par un terme tenant compte dudit facteur de compression $\tau$.

**3.** Procédé de modulation selon l'une quelconque des revendications 1 et 2, caractérisé en qu'il comprend une étape de post-traitement desdits symboles transformés, mise en oeuvre préalablement à ladite étape de filtrage (12), en ce que ladite étape de transformation mathématique (11) délivrant M symboles transformés, avec M un entier égal au nombre de porteuse et, ladite étape de post-traitement met en oeuvre une répétition par bloc desdits M symboles transformés, délivrant $b_1$ blocs de M symboles transformés, avec $b_1$ un entier tel que $b_1 > 0$, et un sous-bloc de $b_2$ symboles transformés, avec $b_2$ un entier tel que $0 \leq b_2 < M$,
et en ce que ladite étape de filtrage polyphase (12) met en oeuvre un filtre prototype de taille $L = b_1M + b_2$ prenant en entrée lesdits $b_1$ blocs de M symboles transformés et ledit sous-bloc de $b_2$ symboles transformés.

4. Procédé de modulation selon la revendication 3, **caractérisé en ce que** $b_1$ est égal à 4 et $b_2$ égal à 0.

5. Procédé de modulation selon l'une quelconque des revendications 1 et 2, **caractérisé en ce que**, pour une modulation de type OFDM/OQAM et pour des symboles de données à valeurs réelles, ladite étape de transformation mathématique (11) met en oeuvre une transformation du domaine fréquentiel vers le domaine temporel comprenant les sous-étapes suivantes :

- application d'une transformée de Fourier inverse partielle auxdits symboles de données, délivrant un premier sous-ensemble de C symboles transformés ;
- obtention, à partir dudit premier sous-ensemble, d'un deuxième sous-ensemble de (M-C) symboles transformés, ledit deuxième sous-ensemble de symboles transformés étant complémentaire dudit premier sous-ensemble de symboles transformés, pour former l'ensemble des M symboles transformés ;
- répétition et permutation desdits M symboles transformés, délivrant L symboles transformés, avec L, M et C des entiers tels que $L > M > C$.

6. Procédé de modulation selon l'une quelconque des revendications 1 à 5, **caractérisé en ce que** ledit facteur de compression $\tau$ est strictement inférieur à 1.

7. Dispositif de modulation de symboles de données, délivrant un signal à porteuses multiples, comprenant :

- un module de transformation mathématique (31, 35, 51) des symboles de données, du domaine fréquentiel vers un domaine temporel, délivrant des symboles transformés ;
- un module de filtrage polyphase (32, 52) desdits symboles transformés, délivrant ledit signal à porteuses multiples,

**caractérisé en ce que** ledit module de filtrage polyphase (32, 52) met en oeuvre un facteur d'expansion tenant compte d'un facteur de compression $\tau$,
ledit facteur de compression $\tau$ étant un nombre compris entre 0 et 1,
ledit facteur d'expansion étant égal à l'arrondi entier de $\left[\tau . \frac{M}{2}\right]$ si lesdits symboles de données sont à valeurs réelles,
et étant égal à l'arrondi entier de $[\tau.M]$ si lesdits symboles de données sont à valeurs complexes, avec M un entier égal au nombre de porteuse et à la taille de ladite transformation mathématique.

8. Procédé de démodulation d'un signal à porteuses multiples, délivrant des symboles de données estimés, mettant en oeuvre :

- une étape de filtrage polyphase (21) dudit signal à porteuses multiples, délivrant des symboles de données dans le domaine temporel,
- une étape de transformation mathématique (22) desdits symboles de données dans le domaine temporel, d'un domaine temporel vers le domaine fréquentiel, délivrant des symboles de données dans le domaine fréquentiel ;

**caractérisé en ce que** ladite étape de filtrage polyphase (21) met en oeuvre un facteur de décimation tenant compte d'un facteur de compression $\tau$, ledit facteur de compression $\tau$ étant un nombre compris entre 0 et 1, ledit facteur de décimation étant égal à l'arrondi entier de $\left[\tau . \frac{M}{2}\right]$ si lesdits symboles de données avant modulation sont à valeurs réelles, et étant égal à l'arrondi entier de $[\tau.M]$ si lesdits symboles de données avant modulation sont à valeurs complexes, avec M un entier égal au nombre de porteuse et à la taille de ladite transformation mathématique.

9. Procédé de démodulation selon la revendication 8, **caractérisé en ce qu'**il comprend une étape de post-traitement (23) des symboles de données dans le domaine fréquentiel, délivrant lesdits symboles de données estimés, ladite étape de post-traitement met en oeuvre une multiplication desdits symboles de données dans le domaine fréquentiel par un terme tenant compte dudit facteur de compression $\tau$.

10. Dispositif de démodulation d'un signal à porteuses multiples, délivrant des symboles de données estimés, comprenant :

   - un module de filtrage polyphase (41, 61) dudit signal à porteuses multiples, délivrant des symboles de données dans le domaine temporel,
   - un module de transformation mathématique (42, 62) desdits symboles de données dans le domaine temporel, d'un domaine temporel vers le domaine fréquentiel, délivrant des symboles de données dans le domaine fréquentiel ;

   **caractérisé en ce que** ledit module de filtrage polyphase (41, 61) met en oeuvre un facteur de décimation tenant compte d'un facteur de compression $\tau$,

   ledit facteur de compression $\tau$ étant un nombre compris entre 0 et 1,

   ledit facteur de décimation étant égal à l'arrondi entier de $\left[ \tau . \dfrac{M}{2} \right]$ si lesdits symboles de données avant modulation sont à valeurs réelles, et étant égal à l'arrondi entier de $[\tau . M]$ si lesdits symboles de données avant modulation sont à valeurs complexes, avec M un entier égal au nombre de porteuse et à la taille de ladite transformation mathématique.

11. Programme d'ordinateur comportant des instructions pour la mise en oeuvre d'un procédé selon la revendication 1 ou selon la revendication 8 lorsque ce programme est exécuté par un processeur.


**Patentansprüche**

1. Verfahren zur Modulation von Datensymbolen, das ein Mehrträgersignal liefert, das anwendet:

   - einen Schritt der mathematischen Transformation (11) der Datensymbole vom Frequenzbereich zu einem Zeitbereich, der transformierte Symbole liefert;
   - einen Schritt der Mehrphasenfilterung (12) der transformierten Symbole, der das Mehrträgersignal liefert,

   **dadurch gekennzeichnet, dass** der Schritt der Mehrphasenfilterung (12) einen Expansionsfaktor anwendet, der einen Kompressionsfaktor $\tau$ berücksichtigt,

   wobei der Kompressionsfaktor $\tau$ eine Zahl zwischen 0 und 1 ist, wobei der Expansionsfaktor gleich der ganzzahligen Rundung von $\left[ \tau . \dfrac{M}{2} \right]$ ist, wenn die Datensymbole reale Werte haben, und gleich der ganzzahligen Rundung von $[\tau . M]$ ist, wenn die Datensymbole komplexe Werte haben, mit M einer ganzen Zahl gleich der Trägeranzahl und der Größe der mathematischen Transformation.

2. Modulationsverfahren nach Anspruch 1, **dadurch gekennzeichnet, dass** es einen Schritt der Vorverarbeitung (10) der Datensymbole enthält, der vor dem Schritt der mathematischen Transformation (11) angewendet wird, und dass der Vorverarbeitungsschritt (10) eine Multiplikation der Datensymbole mit einem Term anwendet, der den Kompressionsfaktor $\tau$ berücksichtigt.

3. Modulationsverfahren nach einem der Ansprüche 1 und 2, **dadurch gekennzeichnet, dass** es einen Schritt der Nachbearbeitung der transformierten Symbole enthält, der vor dem Filterungsschritt (12) angewendet wird, dass der Schritt der mathematischen Transformation (11) M transformierte Symbole liefert, mit M einer ganzen Zahl gleich der Trägeranzahl, und der Nachverarbeitungsschritt eine blockweise Wiederholung der transformierten M Symbole anwendet, die $b_1$ Blöcke von M transformierten Symbolen, mit $b_1$ einer ganzen Zahl derart, dass gilt $b_1 > 0$, und einen Teilblock von $b_2$ transformierten Symbolen liefert, mit $b_2$ einer ganzen Zahl derart, dass gilt $0 \leq b_2 < M$, und dass der Schritt der Mehrphasenfilterung (12) ein Prototyp-Filter der Größe $L = b_1 M + b_2$ anwendet, das am Eingang die $b_1$ Blöcke von M transformierten Symbolen und den Teilblock von $b_2$ transformierten Symbolen nimmt.

4. Modulationsverfahren nach Anspruch 3, **dadurch gekennzeichnet, dass** $b_1$ gleich 4 und $b_2$ gleich 0 ist.

5. Modulationsverfahren nach einem der Ansprüche 1 und 2, **dadurch gekennzeichnet, dass** für eine Modulation des Typs OFDM/OQAM und für Datensymbole mit realen Werten der Schritt der mathematischen Transformation (11) eine Transformation vom Frequenzbereich zum Zeitbereich anwendet, die die folgenden Teilschritte enthält:

- Anwendung einer partiellen inversen FourierTransformation an die Datensymbole, die eine erste Teileinheit von C transformierten Symbole liefert;
- Erhalt, ausgehend von der ersten Teileinheit, einer zweiten Teileinheit von (M-C) transformierten Symbole, wobei die zweite Teileinheit von transformierten Symbolen zur ersten Teileinheit von transformierten Symbolen komplementär ist, um die Einheit der M transformierten Symbole zu bilden;
- Wiederholung und Permutation der M transformierten Symbole, die L transformierte Symbole liefern, mit L, M und C ganze Zahlen derart, dass gilt L > M > C.

6. Modulationsverfahren nach einem der Ansprüche 1 bis 5, **dadurch gekennzeichnet, dass** der Kompressionsfaktor $\tau$ strikt kleiner als 1 ist.

7. Vorrichtung zur Modulation von Datensymbolen, die ein Mehrträgersignal liefert, die enthält:

- ein Modul mathematischer Transformation (31, 35, 51) der Datensymbole vom Frequenzbereich zu einem Zeitbereich, das transformierte Symbole liefert;
- ein Modul der Mehrphasenfilterung (32, 52) der transformierten Symbole, das das Mehrträgersignal liefert,

**dadurch gekennzeichnet, dass** das Modul der Mehrphasenfilterung (32, 52) einen Expansionsfaktor anwendet, der einen Kompressionsfaktor $\tau$ berücksichtigt,
wobei der Kompressionsfaktor $\tau$ eine Zahl zwischen 0 und 1 ist,
wobei der Expansionsfaktor gleich der ganzzahligen Rundung von $\left[\tau . \frac{M}{2}\right]$ ist, wenn die Datensymbole reale Werte haben, und gleich der ganzzahligen Rundung von $[\tau . M]$ ist, wenn die Datensymbole komplexe Werte haben, mit M einer ganzen Zahl gleich der Trägeranzahl und der Größe der mathematischen Transformation.

8. Verfahren zur Demodulation eines Mehrträgersignals, das geschätzte Datensymbole liefert, das durchführt:

- einen Schritt der Mehrphasenfilterung (21) des Mehrträgersignals, der Datensymbole im Zeitbereich liefert,
- einen Schritt der mathematischen Transformation (22) der Datensymbole im Zeitbereich von einem Zeitbereich zum Frequenzbereich, der Datensymbole im Frequenzbereich liefert;

**dadurch gekennzeichnet, dass** der Schritt der Mehrphasenfilterung (21) einen Dezimierungsfaktor anwendet, der einen Kompressionsfaktor $\tau$ berücksichtigt,
wobei der Kompressionsfaktor $\tau$ eine Zahl zwischen 0 und 1 ist, wobei der Dezimierungsfaktor gleich der ganzzahligen Rundung von $\left[\tau . \frac{M}{2}\right]$ ist, wenn die Datensymbole vor Modulation reale Werte haben, und gleich der ganzzahligen Rundung von $[\tau . M]$ ist, wenn die Datensymbole vor Modulation komplexe Werte haben, mit M einer ganzen Zahl gleich der Trägeranzahl und der Größe der mathematischen Transformation.

9. Demodulationsverfahren nach Anspruch 8, **dadurch gekennzeichnet, dass** es einen Schritt der Nachbearbeitung (23) der Datensymbole im Frequenzbereich enthält, der die geschätzten Datensymbole liefert,
der Nachverarbeitungsschritt eine Multiplikation der Datensymbole im Frequenzbereich mit einem Term enthält, der den Kompressionsfaktor $\tau$ berücksichtigt.

10. Vorrichtung zur Demodulation eines Mehrträgersignals, die geschätzte Datensymbole liefert, die enthält:

- ein Modul der Mehrphasenfilterung (41, 61) des Mehrträgersignals, das Datensymbole im Zeitbereich liefert,
- ein Modul der mathematischen Transformation (42, 62) der Datensymbole im Zeitbereich von einem Zeitbereich zum Frequenzbereich, das Datensymbole im Frequenzbereich liefert;

**dadurch gekennzeichnet, dass** das Modul der Mehrphasenfilterung (41, 61) einen Dezimierungsfaktor anwendet, der einen Kompressionsfaktor τ berücksichtigt,

wobei der Kompressionsfaktor τ eine Zahl zwischen 0 und 1 ist,

wobei der Dezimierungsfaktor gleich der ganzzahligen Rundung von $\left[\tau . \frac{M}{2}\right]$ ist, wenn die Datensymbole vor Modulation reale Werte haben, und gleich der ganzzahligen Rundung von [τ.M] ist, wenn die Datensymbole vor Modulation komplexe Werte haben, mit M einer ganzen Zahl gleich der Trägeranzahl und der Größe der mathematischen Transformation.

11. Computerprogramm, das Anweisungen zur Durchführung eines Verfahrens nach Anspruch 1 oder nach Anspruch 8 aufweist, wenn dieses Programm von einem Prozessor ausgeführt wird.


**Claims**

1. Method for modulating data symbols, delivering a multi-carrier signal, implementing:

   - a step of mathematical transformation (11) of the data symbols, from the frequency domain to a time domain, delivering transformed symbols;
   - a step of polyphase filtering (12) of said transformed symbols, delivering said multi-carrier signal,

   **characterized in that** said polyphase filtering step (12) implements an expansion factor taking account of a compression factor τ,
   said compression factor τ being a number lying between 0 and 1, said expansion factor being equal to the integer rounding of [τ. M/2] if said data symbols are real valued, and being equal to the integer rounding of [τ. M] if said data symbols are complex valued, with M an integer equal to the number of carrier and to the size of said mathematical transformation.

2. Modulation method according to Claim 1, **characterized in that** it comprises a step of pre-processing (10) of said data symbols, implemented prior to said mathematical transformation step (11), and **in that** said pre-processing step (10) implements a multiplication of said data symbols by a term taking account of said compression factor τ.

3. Modulation method according to either of Claims 1 and 2, **characterized in that** it comprises a step of post-processing of said transformed symbols, implemented prior to said filtering step (12),
   **in that** said mathematical transformation step (11) delivering M transformed symbols, with M an integer equal to the number of carrier and, said post-processing step implements a block-wise repetition of said M transformed symbols, delivering $b_1$ blocks of M transformed symbols, with $b_1$ an integer such that $b_1 > 0$, and a sub-block of $b_2$ transformed symbols, with $b_2$ an integer such that $0 \le b_2 \le M,$
   and **in that** said polyphase filtering step (12) implements a prototype filter of size $L = b_1 M + b_2$ taking as input said $b_1$ blocks of M transformed symbols and said sub-block of $b_2$ transformed symbols.

4. Modulation method according to Claim 3, **characterized in that** $b_1$ is equal to 4 and $b_2$ equal to 0.

5. Modulation method according to either of Claims 1 and 2, **characterized in that**, for a modulation of OFDM/OQAM type and for real-valued data symbols, said mathematical transformation step (11) implements a transformation from the frequency domain to the time domain comprising the following sub-steps:

   - application of a partial inverse Fourier transform to said data symbols, delivering a first subset of C transformed symbols;
   - obtaining, on the basis of said first subset, of a second subset of (M-C) transformed symbols, said second subset of transformed symbols being complementary to said first subset of transformed symbols, so as to form the set of the M transformed symbols;
   - repetition and permutation of said M transformed symbols, delivering L transformed symbols, with L, M and C being integers such that $L > M > C.$

6. Modulation method according to any one of Claims 1 to 5, **characterized in that** said compression factor τ is strictly less than 1.

**7.** Device for modulating data symbols, delivering a multi-carrier signal, comprising:

- a module for mathematical transformation (31, 35, 51) of the data symbols, from the frequency domain to a time domain, delivering transformed symbols;
- a module for polyphase filtering (32, 52) of said transformed symbols, delivering said multi-carrier signal,

**characterized in that** said polyphase filtering module (32, 52) implements an expansion factor taking account of a compression factor $\tau$,
said compression factor $\tau$ being a number lying between 0 and 1, said expansion factor being equal to the integer rounding of [$\tau$. M/2] if said data symbols are real valued, and being equal to the integer rounding of [$\tau$. M] if said data symbols are complex valued, with M an integer equal to the number of carrier and to the size of said mathematical transformation.

**8.** Method for demodulating a multi-carrier signal, delivering estimated data symbols, implementing:

- a step of polyphase filtering (21) of said multi-carrier signal, delivering data symbols in the time domain,
- a step of mathematical transformation (22) of said data symbols in the time domain, from a time domain to the frequency domain, delivering data symbols in the frequency domain;

**characterized in that** said polyphase filtering step (21) implements a decimation factor taking account of a compression factor $\tau$,
said compression factor $\tau$ being a number lying between 0 and 1, said decimation factor being equal to the integer rounding of [$\tau$. M/2] if said data symbols before modulation are real valued, and being equal to the integer rounding of [$\tau$. M] if said data symbols before modulation are complex valued, with M an integer equal to the number of carrier and to the size of said mathematical transformation.

**9.** Demodulation method according to Claim 8, **characterized in that** it comprises a step of post-processing (23) of the data symbols in the frequency domain, delivering said estimated data symbols, said post-processing step implements a multiplication of said data symbols in the frequency domain by a term taking account of said compression factor $\tau$.

**10.** Device for demodulating a multi-carrier signal, delivering estimated data symbols, comprising:

- a module for polyphase filtering (41, 61) of said multi-carrier signal, delivering data symbols in the time domain,
- a module for mathematical transformation (42, 62) of said data symbols in the time domain, from a time domain to the frequency domain, delivering data symbols in the frequency domain;

**characterized in that** said polyphase filtering module (41, 61) implements a decimation factor taking account of a compression factor $\tau$,
said compression factor $\tau$ being a number lying between 0 and 1,
said decimation factor being equal to the integer rounding of [$\tau$. M/2] if said data symbols before modulation are real valued, and being equal to the integer rounding of [$\tau$. M] if said data symbols before modulation are complex valued, with M an integer equal to the number of carrier and to the size of said mathematical transformation.

**11.** Computer program comprising instructions for the implementation of a method according to Claim 1 or according to Claim 8 when this program is executed by a processor.

Fig. 1

Fig. 2

Fig. 3A

EP 3 005 638 B1

Fig. 3B

Fig. 4

25

Fig. 3C

Fig. 3D

$$\underline{\text{Fig. 5}}$$

$$\underline{\text{Fig. 6}}$$

$c_{m,n}$ →

| 72 |
| $\mu$P |

→ s

| 71 | M | | Pg | 73 |

## Fig. 7

y →

| 82 |
| $\mu$P |

→ $y_{m,n}$

| 81 | M | | Pg | 83 |

## Fig. 8

## RÉFÉRENCES CITÉES DANS LA DESCRIPTION

**Documents brevets cités dans la description**

- FR 2972091

**Littérature non-brevet citée dans la description**

- **NYQUIST ; E. MAZO.** Faster-than-Nyquist signaling. *Bell. Syst. Tech. Journal,* 1975, vol. 54, 1451-1462

- **D. DASALUKUNTE et al.** Multicarrier faster than Nyquist transceivers : Hardware architecture and performance analysis. *IEEE Transactions on Circuits and Systems I : Regular Papers,* 2011, vol. 58